# EUROPEAN PATENT APPLICATION

(11) **EP 2 871 320 A1**
(43) Date of publication of application: **13.05.2015**
(21) Application number: 14191878.9
(22) Date of filing: 05.11.2014
(51) Int. Cl.: E05F 5/02, F16B 21/08

(54) **Clip**

(30) Priority: 06.11.2013 JP 2013230007
(71) Applicant: DAIWA KASEI KOGYO KABUSHIKI KAISHA, Okazaki-shi, Aichi-ken (JP)
(72) Inventor: Kaji, Atsutoshi, Aichi-ken (JP); Kato, Makoto, Aichi-ken (JP)
(74) Representative: Baumgärtel, Gunnar

(57) **Abstract**

A clip may include a base member, a pillar formed in the base member, and engagement legs formed in the pillar. The engagement legs are defined by slots formed in the pillar. Each of the engagement legs has an engaging portion that is shaped to engage an attachment bore formed in a plate-shaped subject member when the pillar is inserted into the attachment bore. Each of the slots is configured such that an edge-to-edge distance in first portions corresponding to a section including the engaging portion of each of the engagement legs is smaller than the edge-to-edge distance in second portions corresponding to a substantial section of each of the engagement legs.

## Description

The present invention relates to a clip. More particularly, the present invention relates to a clip that is configured to be connected to a subject member (an attachment member), so as to attach an attached member coupled to the clip to the subject member.

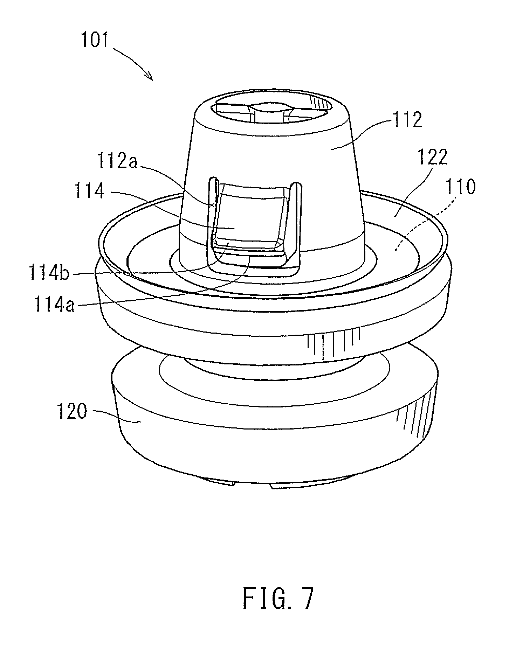

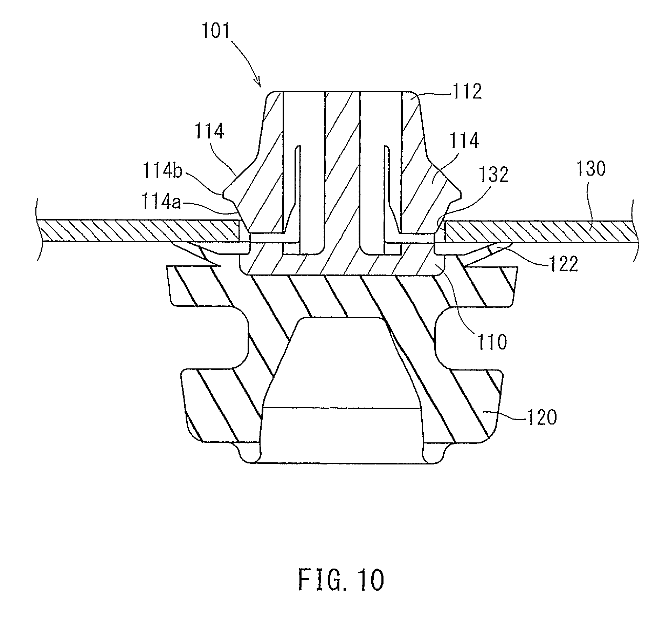

Clips of this type are known. For example, as shown in FIGS. 7-12, a cushion clip 101 is known. The known cushion clip 101 is substantially composed of an anchor, an annular stabilizer 122 and a cushion 120 as an attached member. The anchor includes a circular disk-shaped base member 110, a columnar pillar 112 extending from the base member 110, and a pair of cantilevered engagement legs 114 formed in an outer circumferential surface of the pillar 112 and projected outwardly therefrom. The engagement legs 114 are respectively defined by a pair of U-shaped slots 112a that are diametrically formed in the outer circumferential surface of the pillar 112. As best shown in FIG. 10, the engagement legs 114 respectively have outwardly bulged portions 114b and shouldered portions (engaging portions) 114a formed in lower sides of the bulged portions 114b. The stabilizer 122 is integrally formed in the base member 110. Further, the cushion 120 is coupled to the base member 110 of the cushion clip 101.

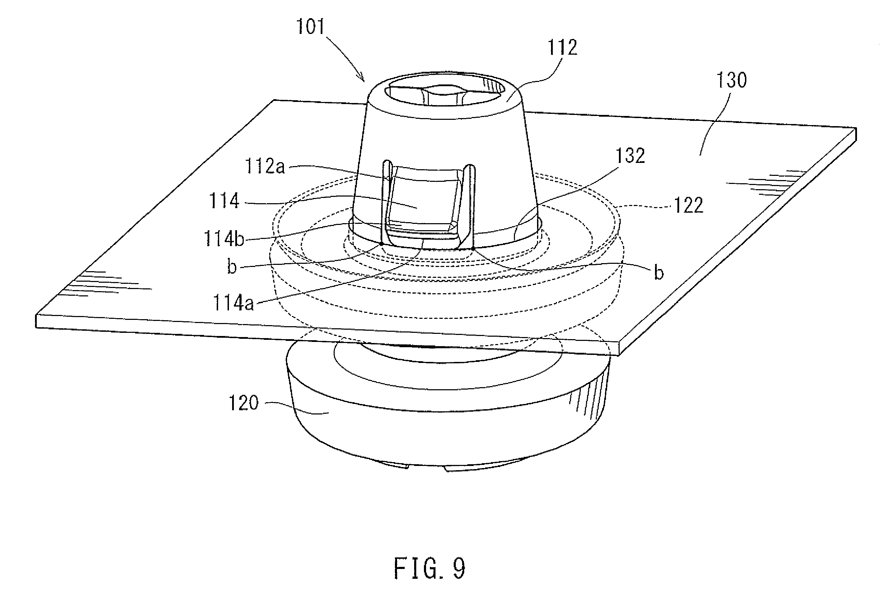

In order to attach the cushion clip 101 (the cushion 120) to a thin plate 130 (e.g., a vehicle body panel) as a subject member, as shown in FIGS. 9 and 10, the pillar 112 (the engagement legs 114) of the cushion clip 101 is inserted into an attachment bore 132 formed in the thin plate 130 while flexing the engagement legs 114 by a periphery of the attachment bore 132 until the thin plate 130 is held between the shouldered portions 114a of the engagement legs 114 and the stabilizer 122 formed in the base member 110. At this time, the shouldered portions 114a of the engagement legs 114 can elastically engage the periphery of the attachment bore 132. As a result, the pillar 112 (the engagement legs 114) can be connected to the thin plate 130 while the thin plate 130 is held between the shouldered portions 114a of the engagement legs 114 and the stabilizer 122. Thus, the cushion clip 101 (the cushion 120) can be attached to the thin plate 130. Further, a condition in which the pillar 112 (the engagement legs 114) is connected to the thin plate 130 may be referred to as a "connected condition" of the cushion clip 101.

Further, another known cushion clip of this type is taught by, for example, JP2012-211660A.

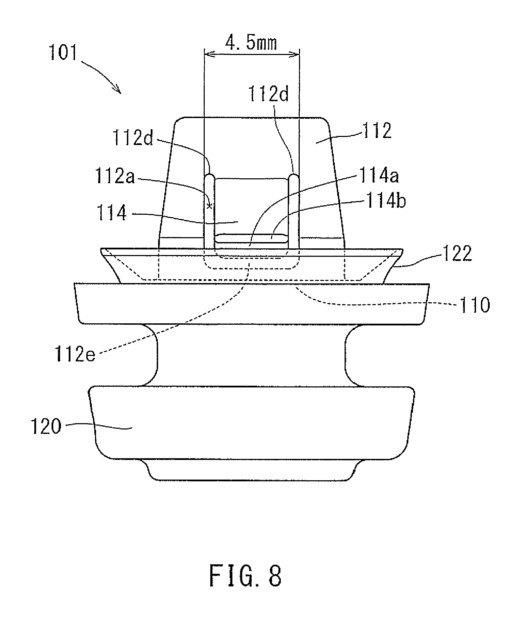

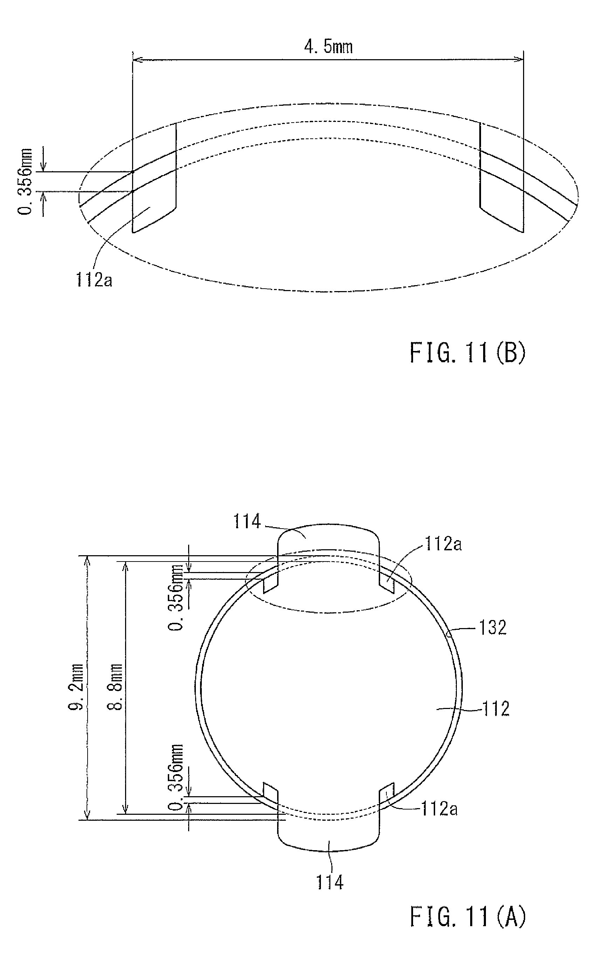

However, in the known art, as shown in FIGS. 11(A) and 11(B), the attachment bore 132 formed in the thin plate 130 has a diameter greater than an outer diameter of the pillar 112 of the anchor. Therefore, in the connected condition of the cushion clip 101, the pillar 112 of the anchor may be diametrically moved or displaced within the attachment bore 132. In particular, the outer diameter of the pillar 112 and the diameter of the attachment bore 132 are respectively 8.8 mm and 9.2 mm. Further, each of the slots 112a has an edge-to-edge distance of 4.5 mm over an entire section thereof, i.e., a section between both (proximal) end portions 112d (corresponding to a proximal end portion of each of the engagement legs 114) and a curved central portion 112e (FIG. 8). That is, each of the slots 112a in a portion corresponding to each of the shouldered portions 114a of the engagement legs 114 engaging the periphery of the attachment bore 132 has the edge-to-edge distance of 4.5 mm.

As a result, a clearance of 0.356 mm can be formed between both side edges of one of the slots 112a formed in the pillar 112 and the periphery of the attachment bore 132. Similarly, a clearance of 0.356 mm can be formed between both side edges of the other of the slots 112a formed in the pillar 112 and the periphery of the attachment bore 132. Therefore, the pillar 112 can be diametrically moved or displaced within the attachment bore 132 by a distance of 0.356 mm.

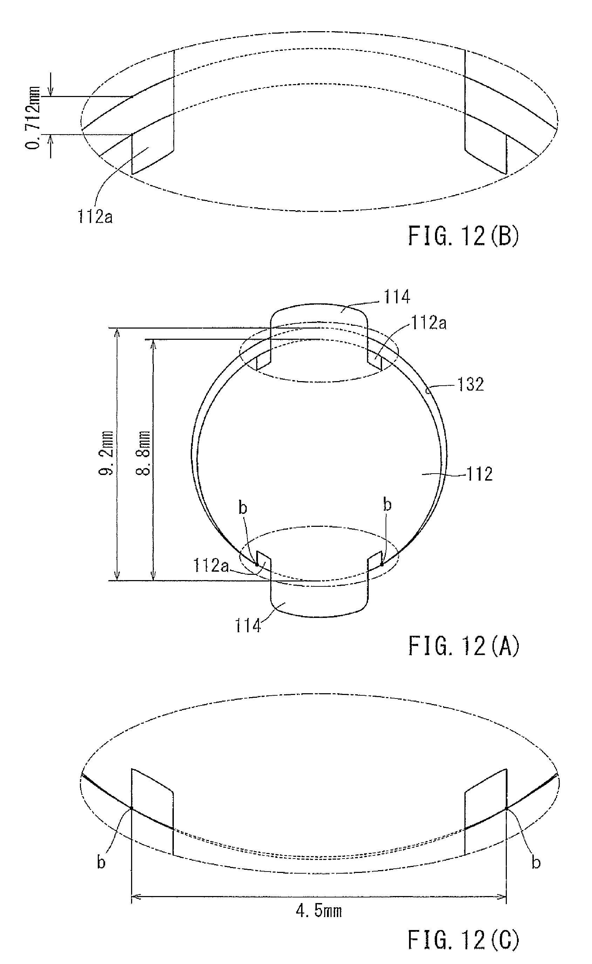

When an external force is diametrically applied to the pillar 112, the pillar 112 can be diametrically displaced within the attachment bore 132. As shown in FIGS. 12(A) to 12(C), when the pillar 112 is diametrically maximally displaced within the attachment bore 132 (i.e., when the pillar 112 is diametrically displaced by the distance of 0.356 mm), a clearance of 0.712 mm (0.356 mm + 0.356 mm) can be formed between the both side edges of one of the slots 112a formed in the pillar 112 and the periphery of the attachment bore 132. Therefore, a wobble or rattling movement of the cushion clip 101 in the connected condition may be produced within the attachment bore 132.

Further, as shown in FIG. 12(C), when the pillar 112 is diametrically maximally displaced within the attachment bore 132, the both side edges of one of the slots 112a formed in the pillar 112 may contact the periphery of the attachment bore 132 at two contact points. The two contact points of the periphery of the attachment bore 132 and the both side edges of one of the slots 112a may be referred to as "contact portions *b"* for convenience. In the cushion clip 101, a distance between the two contact portions b becomes equal to 4.5 mm.

In order to solve the problem, it has been designed that a width of each of the engagement legs 114 has been reduced, so as to reduce the edge-to-edge distance of each of the slots 112a. This means that the distance between the two contact portions b can be effectively reduced. As a result, the clearance formed between the both side edges of one of the slots 112a formed in the pillar 112 and the periphery of the attachment bore 132 can be reduced. Therefore, under the connected condition of the cushion clip 101, the wobble of the cushion clip 101 within the attachment bore 132 can be effectively reduced. However, in such a structure, an elastic biasing force of each of the engagement legs 114 acting on the attachment bore 132 may be reduced. Therefore, a connecting force of the cushion clip 101 to the thin plate 130 can be inevitably reduced. As a result, the cushion clip 101 can be easily detached from the thin plate 130.

Thus, there is a need in the art for improved clips.

For example, one aspect of the present invention may provide a clip which may include a base member, a pillar formed in the base member, and engagement legs formed in the pillar. The engagement legs are defined by slots formed in the pillar. Each of the engagement legs has an engaging portion that is shaped to engage an attachment bore formed in a plate-shaped subject member when the pillar is inserted into the attachment bore. Each of the slots is configured such that an edge-to-edge distance in first portions corresponding to a section including the engaging portion of each of the engagement legs is smaller than the edge-to-edge distance in second portions corresponding to a substantial section of each of the engagement legs.

According to the aspect of the invention, when the pillar of the clip of which the engagement legs are connected to the subject member is diametrically maximally displaced within the attachment bore, a moving distance of the pillar can be effectively reduced. As a result, a clearance formed between both side edges of one of the slots formed in the pillar and a periphery of the attachment bore can be effectively reduced. Thus, the clip connected to the subject member can be effectively prevented from producing a wobble or rattling movement within the attachment bore.

Other objects, features and advantages of the present invention will be readily understood after reading the following detailed description together with the accompanying drawings and the claims.
FIG. 1 is a perspective view of a clip according to a representative embodiment of the present invention, which view is viewed from an anchor side;
FIG. 2 is an elevational view of the cushion clip shown in FIG. 1;
FIG. 3 is a perspective view of the cushion clip, in which the cushion clip shown in FIG. 1 is connected to a thin panel;
FIG. 4 is a vertical cross-sectional view of FIG. 3;
FIG. 5(A) is a simplified enlarged plan view of FIG. 4;
FIG. 5(B) is an enlarged view of an encircled portion of FIG. 5(A);
FIG. 6(A) is a view similar to FIG. 5(A), which view illustrates a condition in which a pillar of an anchor is diametrically maximally displaced,;
FIG. 6(B) is an enlarged view of an upper encircled portion of FIG. 6(A);
FIG. 6(C) is an enlarged view of a lower encircled portion of FIG. 6(A);
FIG. 7 is a perspective view of a conventional cushion clip, which view is viewed from an anchor side;
FIG. 8 is an elevational view of the cushion clip shown in FIG. 7;
FIG. 9 is a perspective view of the cushion clip, in which the cushion clip shown in FIG. 7 is connected to a thin panel;
FIG. 10 is a vertical cross-sectional view of FIG. 9;
FIG. 11(A) is a simplified enlarged plan view of FIG. 10;
FIG. 11(B) is an enlarged view of an encircled portion of FIG. 11(A);
FIG. 12(A) is a view similar to FIG. 6(A), which view illustrates a condition in which a pillar of an anchor is diametrically maximally displaced,;
FIG. 12(B) is an enlarged view of an upper encircled portion of FIG. 12(A); and
FIG. 12(C) is an enlarged view of a lower encircled portion of FIG. 12(A).

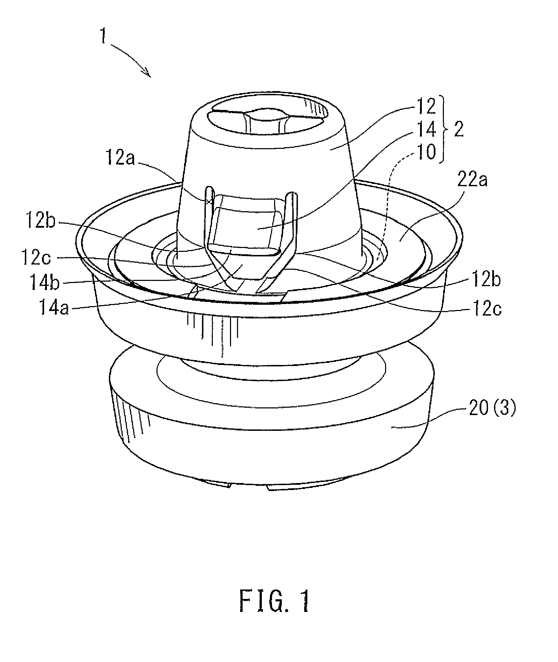

Next, a representative embodiment of the present invention will be described with reference to FIGS. 1 to 6(C).

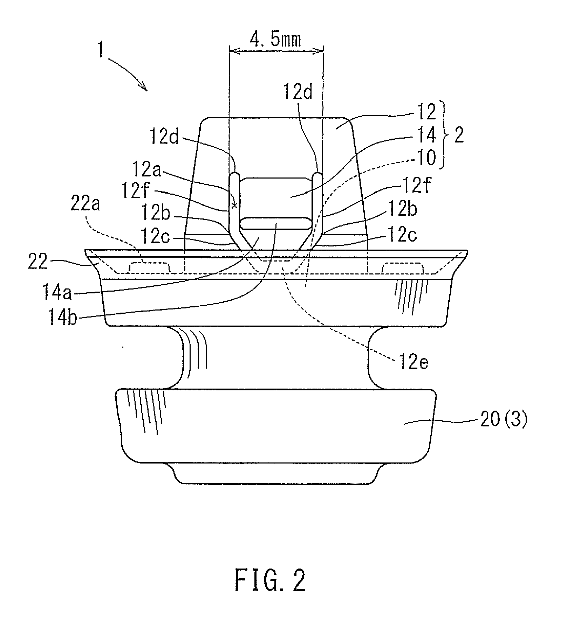

As shown in FIGS. 1 and 2, in the representative embodiment, a cushion clip 1 is exemplified as a clip. The cushion clip 1 may substantially be composed of an anchor 2, a cushion 20 as an attached member 3 and an annular stabilizer 22. The anchor 2, the cushion 20 (the attached member 3) and the stabilizer 22 will be hereinafter described in sequence.

The anchor 2 may include a circular disk-shaped base member 10, a substantially columnar pillar 12 extending from the base member 10, and a pair of cantilevered engagement legs 14 diametrically oppositely formed in an outer circumferential surface of the pillar 12 and projected outwardly therefrom. The engagement legs 14 may respectively be defined by substantially U-shaped slots 12a that are formed in the outer circumferential surface of the pillar 12. Further, in this embodiment, the pillar 12 of the anchor 2 may have an outer diameter of 8.8 mm.

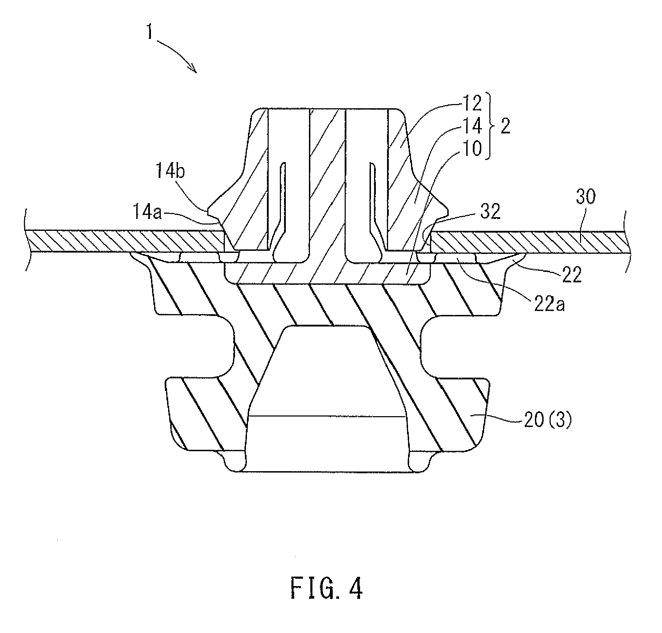

As best shown in FIG. 4, the engagement legs 14 respectively have outwardly bulged portions 14b and stepped or shouldered portions (engaging portion) 14a formed in lower sides of the bulged portions 14b.

As best shown in FIG. 2, each of the slots 12a (one of which is shown) formed in the pillar 12 may have a pair of bent portions 12b that are formed between both (proximal) end portions 12d (corresponding to a proximal end portion of each of the engagement legs 14) and a curved central portion 12e, so as to form a pair of inclined portions 12c that are inclined inwardly. As a result, an edge-to-edge distance of each of the slots 12a may be gradually reduced from the bent portions 12b toward the central portion 12e. As will be recognized, in each of the slots 12a, the bent portions 12b may preferably be formed in portions corresponding to the bulged portion 14b of each of the engagement legs 14. In other words, in each of the slots 12a, the inclined portions 12c may be formed in portions corresponding to a section between the bulged portion 14b and a distal end portion of each of the engagement legs 14, i.e., portions corresponding to a distal end section including the shouldered portion 14a of each of the engagement legs 14. Therefore, as shown in FIG.2, each of the engagement legs 14 defined by the slots 12a may be gradually reduced from the bulged portion 14b toward its distal end portion in width.

Further, in this embodiment, similar to the conventional slots 112a, each of the slots 12a in straight (parallel) portions 12f thereof (i.e., portions between the end portions 12d and the bent portions 12b) may have the edge-to-edge distance of 4.5 mm. However, each of the slots 12a in the inclined portions 12c (i.e., portions between the bent portions 12b and the curved central portion 12e) may have the edge-to-edge distance smaller than 4.5 mm. Further, in each of the slots 12a, the inclined portions 12c and the straight portions 12f may respectively be referred to as "first or contact portions" and "second or non-contact portions."

The cushion 20 (the attached member 3) may preferably be made of an elastically mable elastomer or other such materials. The cushion 20 may be coupled to the base member 10 of the anchor 2. Further, the stabilizer 22 may be integrally formed in the cushion 20. The stabilizer 22 may preferably have semicircular thickened or projected portions 22a that are circumferentially formed in an inner circumferential surface thereof.

As described above, the cushion clip 1 may be composed of the anchor 2 and the cushion 20 including the stabilizer 22. The cushion clip 1 thus constructed may preferably be integrally formed by two-color molding.

The cushion clip 1 may then be attached to a thin plate 30 (e.g., a vehicle body panel) as a plate-shaped subject member. Further, the thin plate 30 may have a circular attachment bore 32 formed therein. As will be recognized, the attachment bore 32 may be configured such that the pillar 12 can be inserted thereinto with the engagement legs 14. The attachment bore 32 may have a diameter of 9.2 mm that is greater than the outer diameter (8.8 mm) of the pillar 12.

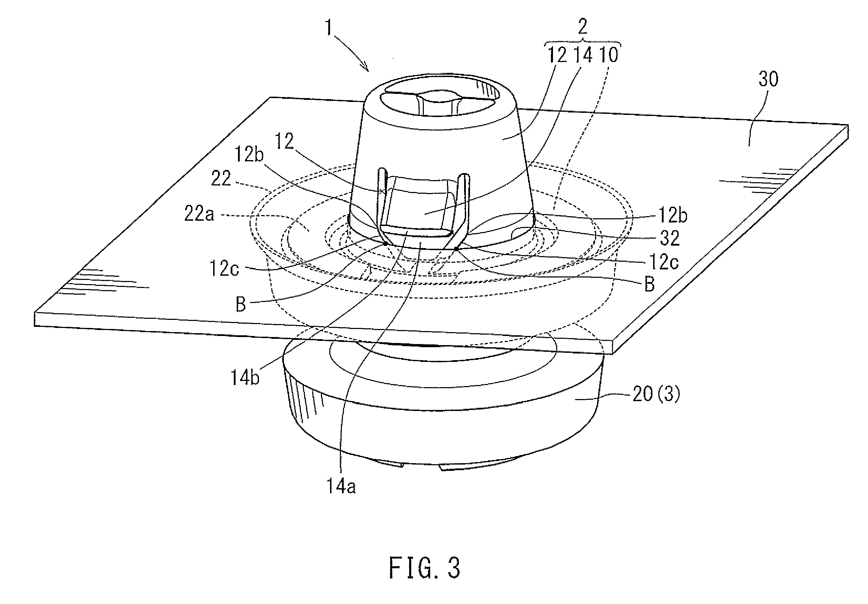

In order to attach the cushion clip 1 (the cushion 20) to the thin plate 30, as shown in FIGS. 3 and 4, the pillar 12 (the engagement legs 14) of the cushion clip 1 may be inserted into the attachment bore 32 formed in the thin plate 30 while flexing the engagement legs 14 by a periphery of the attachment bore 32 until the thin plate 30 is held between the shouldered portions 14a of the engagement legs 14 and the stabilizer 22 formed in the cushion 20. At this time, the shouldered portions 14a of the engagement legs 14 can elastically engage the periphery of the attachment bore 32. As a result, the pillar 12 (the engagement legs 14) can be connected to the thin plate 30 via the engagement legs 14 while the thin plate 30 is held between the shouldered portions 14a of the engagement legs 14 and the stabilizer 22. Thus, the cushion clip 1 (the cushion 20) can be attached to the thin plate 30. Further, a condition in which the pillar 12 (the engagement legs 14) is connected to the thin plate 30 may be referred to as a "connected condition" of the cushion clip 1.

Further, the stabilizer 22 may have sufficient elasticity. Therefore, the cushion clip 1 can be connected to the thin plate 30 having various thickness. Further, when the cushion clip 1 is connected to the thin plate 30, the projected portions 22a formed in the inner circumferential surface of the stabilizer 22 may function to press the thin plate 30. Therefore, even if a wobble or rattling movement of the cushion clip 1 in the connected condition is produced within the attachment bore 32, the periphery of the attachment bore 32 of the thin plate 30 can be effectively prevented from entering the curved central portion 12e of one of the slots 12a.

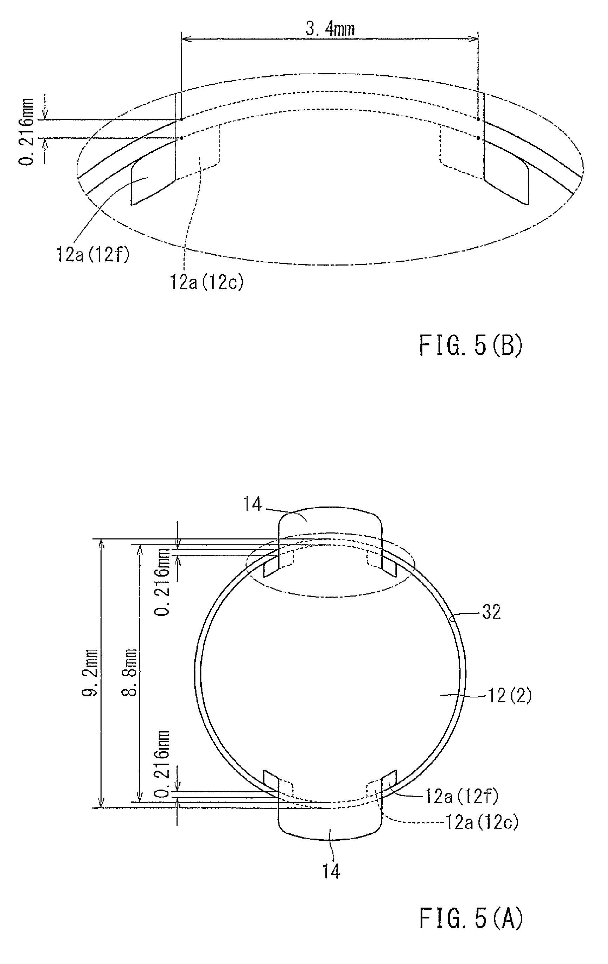

Next, an operation of the cushion clip 1 will now be described with reference to FIGS. 5(A) to 6(C).

As shown in FIG. 5(A), the diameter (9.2 mm) of the attachment bore 32 formed in the thin plate 30 is greater than the outer diameter (8.8 mm) of the pillar 12 of the anchor 2. Therefore, similar to the conventional cushion clip 101, in the connected condition of the cushion clip 1, the pillar 12 of the anchor 2 may be diametrically moved or displaced within the attachment bore 32. However, unlike the known art, in this embodiment, each of the slots 12a may have the inclined portions 12c. Further, as shown in FIG. 5(B), an edge-to-edge distance of each of the slots 12a (the inclined portions 12c) in portions corresponding to the shouldered portion 14a of each of the engagement legs 14 engaging the periphery of the attachment bore 32 may be set to of 3.4 mm.

As a result, as shown in FIG. 5(A), in the connected condition of the cushion clip 1, a clearance of 0.216 mm (smaller than 0.356 mm in the known art) can be formed between both side edges of one of the slots 12a formed in the pillar 12 and the periphery of the attachment bore 32. Similarly, a clearance of 0.216 mm can be formed between both side edges of the other of the slots 12a formed in the pillar 12 and the periphery of the attachment bore 32. Therefore, the pillar 12 can be diametrically moved or displaced within the attachment bore 32 by a distance of 0.216 mm.

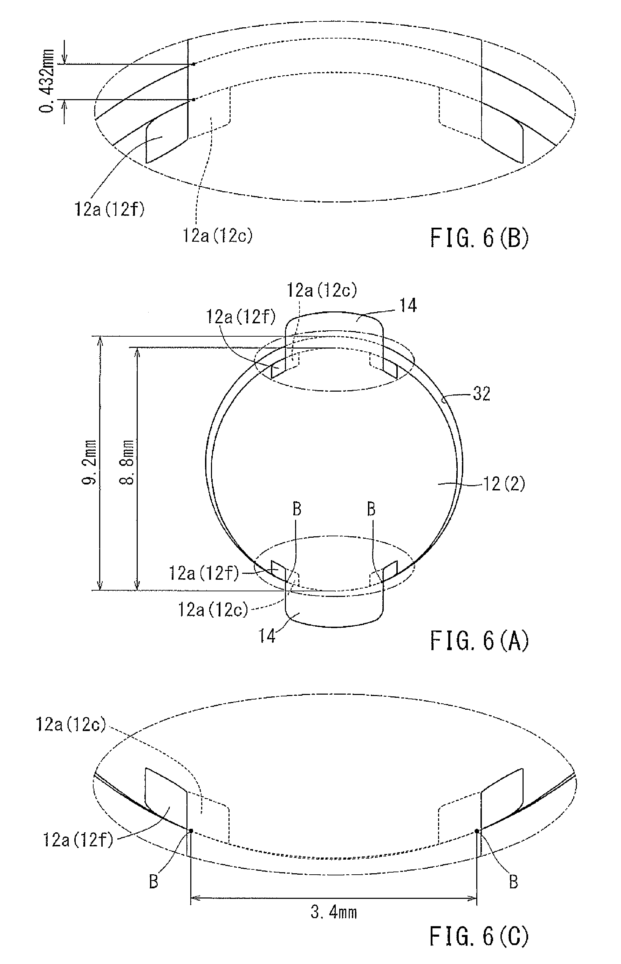

When an external force is diametrically applied to the pillar 12, the pillar 12 can be diametrically displaced within the attachment bore 32. As shown in FIGS. 6(A) to 6(C), when the pillar 12 is diametrically maximally displaced within the attachment bore 32 (i.e., when the pillar 12 is diametrically displaced by the distance of 0.216 mm), a clearance of only 0.432 mm (0.216 mm + 0.216 mm) that is smaller than the known art (0.712 mm) can be formed between the both side edges of one of the slots 12a formed in the pillar 12 and the periphery of the attachment bore 32. Thus, according to the embodiment, the clearance formed between the both side edges of one of the slots 12a formed in the pillar 12 and the periphery of the attachment bore 32 when the pillar 12 is diametrically displace can be effectively reduced. Therefore, the cushion clip 1 in the connected condition can be prevented from producing a wobble or rattling movement within the attachment bore 32.

Further, as shown in FIGS. 6(A) and 6(C), when the pillar 12 of the cushion clip 1 is diametrically displaced at a maximum, both side edges of the other of the slots 12a formed in the pillar 12 may contact the periphery of the attachment bore 32 at two contact points which are contained in or positioned on the inclined portions 12c of one of the slots 12a. The two contact points of the periphery of the attachment bore 32 and the both side edges of one of the slots 12a may be referred to as "contact portions *B"* for convenience. As will be recognized, a distance between the two contact portions *B* becomes equal to 3.4 mm.

Thus, in this embodiment, each of the slots 12a is configured such that the edge-to-edge distance in the inclined portions 12c (the first or contact portions) including the contact portions *B* is smaller than the edge-to-edge distance in the straight portions 12f (the second or non-contact portions) corresponding to the straight portions 12f thereof. Therefore, when the pillar 12 is diametrically maximally displaced within the attachment bore 32 in the connected condition of the cushion clip 1, a moving distance of the pillar 12 can be reduced.

Further, as described above, each of the slots 12a is configured such that the edge-to-edge distance is reduced only in the section corresponding to the inclined portions 12c thereof. That is, the straight portions 12f of each of the slots 12a may have the same edge-to-edge distance (4.5 mm) as each of the slots 112a of the conventional clip 101. As a result, a substantial section (i.e., a section between the proximal end portion and the bulged portion 14b) of each of the engagement legs 14 may have the same width as each of the engagement legs 114 of the conventional clip 101. Therefore, an elastic biasing force of each of the engagement legs 14 acting on the attachment bore 32 may be the same as each of the engagement legs 114 of the conventional clip 101. As a result, a connecting force (an attaching force) of the cushion clip 1 to the thin plate 30 cannot be reduced.

Naturally, various changes and modifications may be made to the present invention without departing from the scope of the invention. For example, in the embodiment, the stabilizer 22 is integrally formed in the cushion 20. However, the stabilizer 22 may be integrally formed in the base member 10 of the anchor 2.

Further, in the embodiment, the cushion 20 is exemplified as the attached member 3. However, the attached member 3 may be a belt for clamping a wiring harness.

A representative example of the present invention has been described in detail with reference to the attached drawings. This detailed description is merely intended to teach a person of skill in the art further details for practicing preferred aspects of the present invention and is not intended to limit the scope of the invention. Only the claims define the scope of the claimed invention. Therefore, combinations of features and steps disclosed in the foregoing detail description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present invention.

## Claims

1. A clip (1) comprising a base member (10), a pillar (12) formed in the base member (10), and engagement legs (14) formed in the pillar (12), the engagement legs (14) being defined by slots (12a) formed in the pillar (12),
wherein each of the engagement legs (14) has an engaging portion (14a) that is shaped to engage an attachment bore (32) formed in a plate-shaped subject member (30) when the pillar (12) is inserted into the attachment bore (32), and
wherein each of the slots (12a) is configured such that an edge-to-edge distance in first portions (12c) corresponding to a section including the engaging portion (14a) of each of the engagement legs (14) is smaller than the edge-to-edge distance in second portions (12f) corresponding to a substantial section of each of the engagement legs (14).

2. The clip as defined in claim 1 further comprising a cushion (20) coupled to the base member (10).

3. The clip as defined in claim 2 further comprising a stabilizer (22) capable of contacting the subject member (30) when the pillar (12) is inserted into the attachment bore (32).

4. The clip as defined in claim 3, wherein the stabilizer (22) is integrally formed in the base member (10).

5. The clip as defined in claim 3, wherein the stabilizer (22) is integrally formed in the cushion (20).
